(19) Europäisches Patentamt / European Patent Office / Office européen des brevets

(11) **EP 2 655 102 B1**

(12) **FASCICULE DE BREVET EUROPEEN**

(45) Date de publication et mention
de la délivrance du brevet:
**08.07.2015 Bulletin 2015/28**

(21) Numéro de dépôt: **10782650.5**

(22) Date de dépôt: **08.10.2010**

(51) Int Cl.:
***B60C 23/04*** *(2006.01)*

(86) Numéro de dépôt international:
**PCT/FR2010/000678**

(87) Numéro de publication internationale:
**WO 2012/045917 (12.04.2012 Gazette 2012/15)**

(54) **PROCEDE ET DISPOSITIF D'ECHANTILLONNAGE DE MESURES D'ACCELERATION D'UNE ROUE D'UN VEHICULE AUTOMOBILE**

VERFAHREN UND VORRICHTUNG ZUM ABTASTEN VON AN EINEM FAHRZEUGRAD GEMESSENEN BESCHLEUNIGUNGSMESSDATEN

METHOD AND DEVICE OF MEASUREMENT SAMPLING OF VEHICLE WHEEL ACCELERATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**30.10.2013 Bulletin 2013/44**

(73) Titulaires:
• **Continental Automotive France**
  **31100 Toulouse (FR)**
• **Continental Automotive GmbH**
  **30165 Hannover (DE)**

(72) Inventeur: **GUINART, Nicolas**
**31200 Toulouse (FR)**

(56) Documents cités:
**EP-A1- 1 693 231      DE-A1-102005 002 240**
**DE-B3-102004 042 191   US-A1- 2005 156 722**
**US-B1- 6 204 758**

**Description**

L'invention concerne un procédé d'échantillonnage de mesures d'accélération d'une roue d'un véhicule automobile équipé d'un système de surveillance de la pression des pneus.

De plus en plus de véhicules automobiles possèdent, à des fins de sécurité, des systèmes de surveillance de la pression des pneus comportant des capteurs montés sur chacune des roues du véhicule dédiés à la mesure de paramètres, tels que pression et/ou température des pneumatiques équipant ces roues et destinés à informer le conducteur de toute variation anormale du paramètre mesuré.

Ces systèmes de surveillance sont classiquement dotés, d'une part, de boîtiers électroniques (appelés aussi unités roue) montés sur chacune des roues du véhicule, et intégrant, outre les capteurs précités, un microprocesseur, un émetteur radiofréquence (RF) ainsi qu'une antenne LF (« Low Frequency » en anglais, basse fréquence), et d'autre part, d'une unité centrale (montée sur le véhicule) de réception des signaux émis par les émetteurs, comportant un calculateur électronique intégrant un récepteur radiofréquence connecté à une antenne.

De tels systèmes de surveillance nécessitent l'obligation d'associer à chaque signal reçu par le récepteur de l'unité centrale, une information concernant la localisation du boîtier électronique émetteur et donc de la roue à l'origine de ce signal, cette obligation perdurant pendant la durée de vie du véhicule, c'est-à-dire devant être respectée même après des changements de roues ou plus simplement des inversions de la position de ces roues.

Actuellement, il existe plusieurs procédés permettant de déterminer la localisation des roues sur un véhicule. Ainsi, par exemple, on peut utiliser à cet effet trois antennes radio basse fréquence (LF) situées à proximité des unités roues, c'est-à-dire respectivement dans la poignée de la portière du conducteur, dans celle de la portière du passager et dans celle du coffre de la voiture.

L'unité centrale envoie des signaux basse fréquence successivement à chacune de ces antennes pour les exciter. Selon cette procédure le boîtier électronique monté sur la roue située à proximité de l'antenne excitée émet en réponse et à destination de l'unité centrale un signal comportant un code d'identification du dit boîtier, de sorte que l'excitation successive des trois antennes conduit à la localisation des trois boitiers électroniques montés sur les roues jouxtant ces antennes, et par déduction, à la localisation du quatrième boîtier.

Cependant ce système de localisation est relativement coûteux et complexe, puisqu'il nécessite trois antennes LF.

Un autre système de localisation des roues d'un véhicule, ne nécessitant pas d'antennes LF supplémentaires, consiste, pour des véhicules ayant des capteurs ABS (« AntiBlockierSystem », en allemand ou système antiblocage), à équiper chaque unité roue d'un capteur d'accélération radiale.

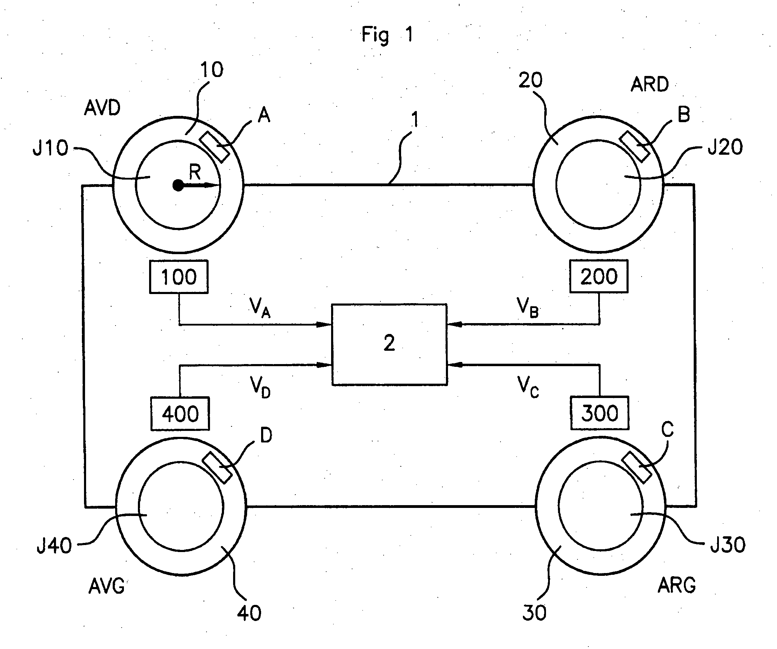

Comme illustré à la figure 1, un véhicule 1, équipé d'un système ABS et d'un système de surveillance de la pression des pneumatiques, comporte :

- pour le système ABS : des capteurs ABS 100, 200, 300, 400 situés en face de chacune des roues 10, 20, 30, 40 du véhicule 1, mesurant la vitesse de rotation de chacune de ces roues $V_A$, $V_B$, $V_C$, et $V_D$, et reliés à une unité centrale 2 via un réseau CAN (« Control Area Network » en anglais, ou bus système série),
- pour le système de surveillance de la pression des pneumatiques: des unités roues A, B, C, D situées sur chacune des jantes J10, J20, J30, J40 de rayon R des roues 10, 20, 30, 40, mesurant l'accélération radiale de ces roues et reliées par RF à l'unité centrale 2.

Le capteur ABS situé en regard de la roue repère chaque dent d'une cible dentée située sur la roue, les dents sont équidistantes et représentent donc la position angulaire de la roue à un instant donné.

L'unité roue, quant à elle, émet à une position fixe sur la roue un signal à destination de l'unité centrale.

Les roues 10, 20, 30, 40 équipant un même véhicule 1 ne tournent pas toutes à la même vitesse $V_A$, $V_B$, $V_C$, $V_D$, cela dépend avant tout de la trajectoire du véhicule 1 (en l'occurrence des virages), mais aussi de l'usure, et de la pression des pneumatiques ainsi que des effets de dérapages (freinages et/ou accélérations). Il en découle que la position initiale fixe d'émission de l'unité roue se décale pour chaque roue après quelques tours de roue.

En corrélant la position angulaire de la roue, fournie par le capteur ABS, au moment où l'unité roue émet, alors l'unité centrale 2 en déduit la position d'émission de l'unité roue sur le tour de roue ainsi que les positions avant droit AVD, arrière droit ARD, avant gauche AVG et arrière gauche ARG des unités roue A, B, C, D. En effet l'unité roue appartient à la roue dont le capteur ABS repère constamment la même position d'émission sur la roue de l'unité roue ; la position des capteurs ABS, 100, 200, 300, 400 étant fixe sur le véhicule 1 et connue par l'unité centrale 2.

L'unité roue détermine ainsi le couple (capteur ABS, unité roue) qui indique une même position angulaire d'émission. Ce procédé de localisation utilisant les capteurs ABS est décrit dans le document US 6,112,587 au nom de la demanderesse.

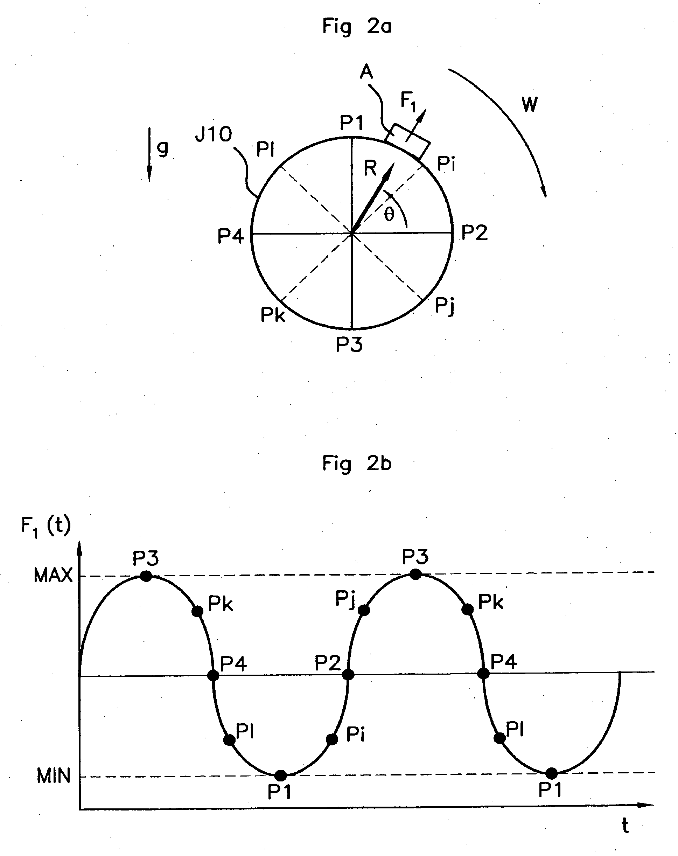

Ce procédé de localisation des roues est fiable et robuste, cependant le problème majeur est de s'assurer que l'unité roue émet toujours à la même position sur la roue. Afin de déterminer cette position fixe d'émission, le capteur d'accélération radiale de l'unité roue mesure sur un tour de roue plusieurs fois l'accélération radiale. Le document US 2005/0156722 divulgue un tel système avec accéléromètre radial et echantillonnage variable en accord avec les préambules des revendications 1 et 6. Ceci est illustré à la figure 2. A la figure 2a, l'unité roue A située sur la jante J10 de la roue 10 comporte un accéléromètre (non représenté) qui mesure l'accélération radiale $F_1$ qu'il subit à diverses positions sur un tour de roue, lorsque la roue tourne dans le sens de rotation W, c'est-à-dire aux positions Pi, P2, Pj, P3, Pk, P4, Pl. Ces mesures sont réalisées préférentiellement à fréquence fixe.

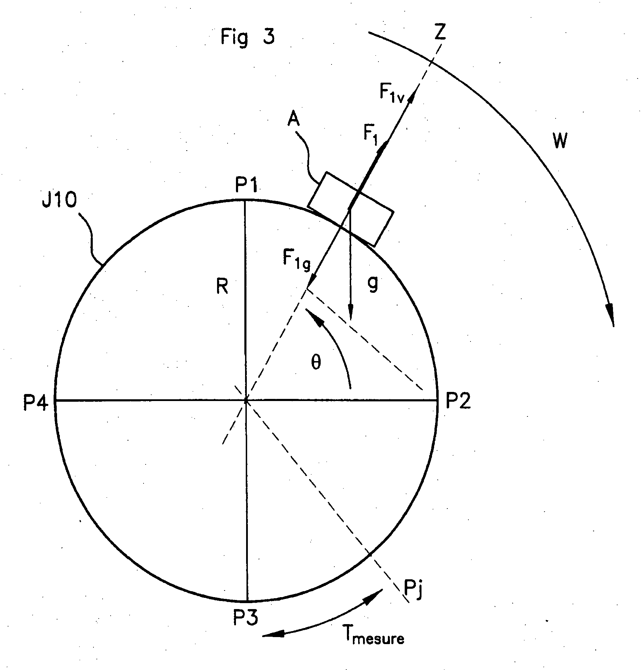

Comme illustré à la figure 3, la force $\vec{F}_1$ d'accélération mesurée par l'accéléromètre radial de l'unité roue A est la résultante de deux composantes radiales, une force $\vec{F}_{lg}$, qui est la projection de la gravité g selon la direction de mesure Z de l'accéléromètre radial et une force $\vec{F}_{lv}$ qui est la projection de la force centrifuge $\vec{F}_v$, selon cette même direction de mesure Z de l'accéléromètre radial A, ainsi :

$$\vec{F}_1 = \vec{F}_{lg} + \vec{F}_{lv}$$

Il est à noter que la projection de la force centrifuge selon la direction de mesure Z de l'accéléromètre radial est égale à la force centrifuge elle-même, puisque cette direction de mesure Z est dirigée radialement par rapport à la roue, et que la force centrifuge s'exerce radialement à la roue. Par conséquent :

$$\vec{F}_{lv} = \vec{F}_v .$$

La valeur de la projection de la gravité selon la direction de mesure de l'accéléromètre radial à l'instant t s'exprime de la manière suivante :

$$F_{lg}(t) = g \cdot \sin(w(t) \cdot t) \qquad (1)$$

où :

- $g$ représente la constante de gravité, c'est un vecteur vertical, dirigé vers le bas, de valeur -9.81 m/s$^2$,
- w(t) est la vitesse angulaire de rotation de l'accéléromètre radial à l'instant t,
- t est l'unité de temps en secondes.

La valeur de la force centrifuge s'exprime de la manière suivante :

$$F_v(t) = R \cdot w(t)^2 \qquad (2)$$

avec R: la distance entre l'accéléromètre et l'axe de rotation de la roue, c'est-à-dire le rayon de la jante.

Par conséquent :

$$F_1(t) = g \cdot \sin(w(t) \cdot t) + R \cdot w(t)^2 \qquad (3)$$

Et:

$$w(t) = \frac{v(t)}{R_P} \qquad (4)$$

avec v(t), la vitesse linéaire du véhicule, $R_P$ étant le rayon de la roue, incluant le pneumatique.

La courbe de l'accélération radiale $F_1(t)$ en fonction du temps est donc une sinusoïde (cf. figure 2b), dont le maximum MAX et le minimum MIN correspondent respectivement à la position de l'accéléromètre en bas de la jante en position P3 et respectivement en haut de la jante en position P1. Bien sûr, les valeurs du minimum et du maximum de l'accélération radiale en position P1 et P3 ne sont pas fixes et dépendent de la vitesse de rotation de la roue, ce minimum et maximum ne peuvent donc être déterminés que localement à chaque tour de roue et non pas de manière absolue par rapport à des seuils de valeurs fixes.

Un traitement numérique de ces mesures d'accélération radiale par l'unité roue, non détaillé ici, et connu de l'homme du métier, permet de déterminer la valeur minimum MIN de l'accélération radiale et donc le passage de l'accéléromètre à la position P1 et/ou la valeur maximum MAX de l'accélération radiale et donc le passage de l'accéléromètre à la position P3:

A partir de ces données de mesure d'accélération radiale $F_1$, il est donc possible, par un traitement numérique approprié, de connaître le passage de l'unité roue aux positions P1 et/ou P3 sur la roue. Il est alors possible pour l'unité roue 2 d'émettre, à l'issue de ce traitement numérique à ces positions fixes déterminées (ou légèrement décalé, tenant compte de la durée du traitement numérique, comme expliqué ci-dessous) un signal à destination de l'unité centrale.

Il est à noter que le traitement des mesures d'accélération radiale permettant de déterminer ces positions n'est pas immédiat, il existe donc une durée (de traitement) entre la détermination de la position d'émission et l'émission du signal par l'unité roue. La position fixe d'émission est donc située juste après, dans le sens de rotation de la roue, ces positions déterminées.

Bien sûr, en multipliant les mesures d'accélération, on améliore la précision sur la détermination de la position fixe d'émission de l'unité roue et on réduit la durée de traitement numérique mentionnée ci-dessus ; cependant, la durée de vie de la pile alimentant l'unité roue en est d'autant diminuée.

Au contraire, si on fixe un intervalle de temps assez long entre deux mesures d'accélération radiale, suffisant pour ne pas solliciter inutilement la pile, alors cet intervalle de temps peut s'avérer suffisant pour effectuer un nombre minimum de mesures d'accélération radiale sur un tour de roue à petite vitesse de rotation ou pour des roues dont le rayon de jante est grand, mais il peut s'avérer trop grand pour de grandes vitesses de rotation ou pour des rayons de jantes plus petits. En effet, si cet intervalle est trop grand, alors le nombre de mesures d'accélération radiale sur un tour de roue est insuffisant pour pouvoir déterminer rapidement (c'est-à-dire sur un tour de roue) et de manière fiable le minimum ou maximum de l'accélération radiale, c'est-à-dire les positions fixes d'émission de l'unité roue.

Fixer un intervalle de temps prédéterminé entre deux mesures successives d'accélérations fournies par l'accéléromètre radial n'est donc pas souhaitable. Ce temps de mesure varie avec la vitesse de rotation de la roue et, par conséquent, avec la vitesse du véhicule, ainsi qu'avec le rayon de la jante de la roue. En effet, plus le rayon est petit, plus le temps nécessaire pour effectuer un tour de roue est court, et donc plus les mesures doivent être rapprochées.

Le but de la présente invention est de remédier à cet inconvénient en calculant un intervalle de temps entre deux mesures successives d'accélération radiale, adapté à la vitesse de rotation de la roue, pour déterminer de manière fiable et rapide la position fixe d'émission de l'unité roue sur la roue. On notera qu'un des buts de l'invention, illustré ici est de déterminer une position fixe absolue de l'accéléromètre radial (c'est-à-dire de l'unité roue) sur la roue et non une position relative.

L'invention proposée concerne un procédé d'échantillonnage de mesure d'accélération d'une roue d'un véhicule automobile, ledit véhicule étant muni d'un système de surveillance de la pression des pneumatiques, et étant équipé d'une unité centrale électronique, les dites roues comportant chacune :

- une unité roue fixée sur une jante de rayon R et comportant au moins un accéléromètre, mesurant l'accélération radiale $F_1$ de la roue,
- un microprocesseur,

le dit procédé comportant la mesure, par tour de roue, à des intervalles de temps donnés ($T_{mesure}$), d'un nombre (N) de valeurs d'accélération radiale par l'accéléromètre radial,
et le procédé selon l'invention consiste à :

- fixer un nombre minimum (N) de mesures d'accélération par tour de roue et,
- déterminer les intervalles de temps ($T_{mesure}$) entre deux mesures d'accélération radiale par la relation suivante :

$$T_{mesure} = \frac{2\pi \cdot \sqrt{\dfrac{R}{F_1}}}{N}$$

Dans un mode de réalisation, l'accéléromètre est un accéléromètre radial.

Selon différents modes de réalisation :

- pour un rayon de jante donné (R), le nombre de mesures d'accélération par tour de roue (N) est fixé à 15 et,

- pour un rayon de jante estimé (R), le nombre de mesures d'accélération par tour de roue (N) est supérieur à 15.

L'invention propose aussi que les mesures d'accélérations soient filtrées, par un filtre passe-haut et/ou par un filtre passe-bas afin d'éliminer les mesures issues de bruits parasites et pour éliminer la composante continue de l'accélération, c'est-à-dire la force centrifuge $F_v(t) = R \cdot w(t)^2$ afin d'améliorer le traitement sur la forme du signal émit par l'accéléromètre, c'est-à-dire sur la courbe représentant la valeur de la projection de la gravité selon la direction de mesure de l'accéléromètre radial, soit $F_{lg}(t) = g \cdot \sin(w(t) \cdot t)$.

L'invention concerne également le dispositif mettant en oeuvre le procédé d'échantillonnage de mesure d'accélération tel que décrit ci-dessus.

D'autres objets, caractéristiques et avantages de l'invention, apparaîtront à la lecture de la description qui va suivre à titre d'exemple non limitatif et en référence aux dessins annexés dans lesquels :

- **la figure 1,** déjà expliquée précédemment, est une représentation schématique du système de surveillance de la pression des pneumatiques d'un véhicule, équipé d'un système ABS, selon l'art antérieur,
- **la** figure 2 (2a et 2b), déjà expliquée précédemment, illustre l'échantillonnage des mesures d'accélération radiale afin de déterminer une position fixe d'émission de l'unité roue, selon l'art antérieur,
- **la figure 3,** déjà expliquée précédemment, illustre la décomposition des forces subies par l'accéléromètre radial selon l'art antérieur.

Il est connu que la valeur de l'accélération radiale $F_1$ mesurée par l'accéléromètre radial est donnée par l'équation :

$$F_1(t) = g \cdot \sin(w(t) \cdot t) + R \cdot w(t)^2 \qquad (3)$$

Puisque l'expression $g \cdot \sin(w(t) \cdot t)$ de la formule (3) varie de + 9.81 à - 9.81 m/s$^2$ car sin(w(t).t) varie de -1 à +1, l'invention propose donc que la valeur de cette expression soit négligée devant la valeur de la force centrifuge qui, elle, est proportionnelle au carré de la vitesse linéaire du véhicule. On peut donc simplifier l'expression (3), ce qui donne :

$$F_1(t) = R \cdot w(t)^2 \qquad (5)$$

Durant un tour de roue, la vitesse angulaire est calculée par :

$$w = \frac{2 \cdot \Pi}{T} \qquad (6)$$

T étant égal au temps pour réaliser un tour de roue.

L'expression (6) devient alors :

$$\frac{2 \cdot \Pi}{T} = \sqrt{\frac{F_1}{R}}$$

avec $F_1$, la valeur de l'accélération mesurée par l'accéléromètre radial A sur un tour de roue.

Le temps T nécessaire pour réaliser un tour de roue devient :

$$T = 2 \cdot \Pi \cdot \sqrt{\frac{R}{F_1}}$$

Ainsi, la durée T d'un tour de roue est donnée en fonction de la valeur d'accélération $F_1$ d'un tour de roue, mesurée par l'accéléromètre radial et du rayon de la jante R.

Selon l'invention, si l'on souhaite effectuer N mesures d'accélérations par tour de roue, l'intervalle de temps $T_{mesure}$ entre deux mesures sera donc équivalent à :

$$T_{mesure} = \frac{2 \cdot \Pi \cdot \sqrt{\dfrac{R}{F_1}}}{N} \qquad\qquad (7)$$

Ainsi, grâce à l'invention, il est possible, une fois le nombre de mesures d'accélération radiale N fixé, de déterminer le temps entre deux mesures d'accélération radiale selon le rayon de jante de la roue R et selon la vitesse de la roue (c'est-à-dire selon l'accélération radiale $F_1$).

L'avantage de l'invention est donc de pouvoir faire varier l'intervalle de temps entre deux mesures $T_{mesure}$, par exemple entre les positions Pj et P3 (cf. figure 3) en fonction des conditions externes telles que le rayon de la jante R ou la vitesse véhicule. Ce procédé d'échantillonnage de mesures d'accélération permet de maintenir un nombre N prédéterminé et jugé suffisant pour trouver à chaque tour de roue la valeur maximum MAX et minimum MIN d'accélération radiale afin que l'unité roue puisse émettre toujours à la même position fixe sur la roue.

Bien sûr, les mesures d'accélération radiale peuvent être filtrées (filtre passe-haut ou passe-bas) pour éviter des mesures parasites provenant par exemple d'un dérapage soudain d'un pneumatique les vibrations provenant de la surface de la roue, ou encore les vibrations provenant de l'axe de la roue.

Il semblerait, à la vue de la figure 2b, que quatre mesures d'accélération radiale sur un tour de roue suffisent pour déterminer les valeurs maximum et minimum de l'accélération radiale, c'est-à-dire les positions P1 et P3. Cependant, il est évident qu'il n'est pas possible de déterminer ces valeurs en mesurant l'accélération radiale, par exemple seulement aux positions Pi, Pj, Pk et Pl. De plus, la figure 2b a été simplifiée pour des buts d'explication de l'invention et la courbe réelle représentant les mesures d'accélération radiale sur un tour de roue est bruitée et comporte plusieurs maximums et plusieurs minimums locaux qu'il faut distinguer du minimum et du maximum absolu correspondant bien aux positions P1 et P3. Le nombre de mesures d'accélération radiale nécessaire pour déterminer les positions P1 et P3 est donc largement au-dessus de quatre.

Dans notre exemple, pour un rayon de jante égal à 15 pouces et une fréquence de rotation de roue de 3 Hz à 20 Hz, le nombre N de mesures d'accélérations est fixé à 15. Pour un rayon de jante estimé et non connu, le nombre de mesures d'accélération N est supérieur à 15. Bien sûr, pour un type de véhicule commercialisé avec plusieurs rayons de jantes possibles, le traitement numérique est défini pour pouvoir tolérer des variations du nombre de mesure d'accélération radiale N (c'est-à-dire d'échantillons) par tour de roue pouvant aller jusqu'à 30 % (c'est-à-dire N et égal à 10 à la place de 15).

La détermination de N est cruciale. Elle peut être empirique ou dépendre des capacités de traitement du signal de l'unité roue ; en effet, puisque l'unité roue doit pouvoir déterminer rapidement la ou les position(s) correspondante(s) au maximum et/ou au minimum de l'accélération radiale, la quantité de données, c'est-à-dire le nombre de mesures d'accélération N à traiter doit être limité.

## Revendications

1. Procédé d'échantillonnage de mesure d'accélération d'une roue (10, 20, 30,40) d'un véhicule automobile (1), ledit véhicule (1) étant muni d'un système de surveillance de la pression des pneumatiques, et étant équipé d'une unité centrale électronique (2), les dites roues (10, 20, 30, 40) comportant chacune :

    • une unité roue (A, B, C, D) fixé sur une jante (J10, J20, J30, J40) de rayon R et comportant au moins un accéléromètre, mesurant l'accélération radiale $F_1$ de la roue,
    • un microprocesseur,

    le dit procédé consistant à mesurer, par tour de roue, à des intervalles de temps donnés ($T_{mesure}$), un nombre (N) de valeurs d'accélération radiale par l'accéléromètre radial,
    et le procédé étant **caractérisé en ce qu'**il consiste à :

    • fixer un nombre minimum (N) de mesures d'accélération par tour de roue et,
    • déterminer les intervalles de temps ($T_{mesure}$) entre deux mesures d'accélération radiale par la relation suivante :

$$T_{mesure} = \frac{2\pi \cdot \sqrt{\dfrac{R}{F_1}}}{N}$$

**2.** Procédé de localisation selon la revendication 1, **caractérisé en ce que** l'accéléromètre est un accéléromètre radial.

**3.** Procédé de localisation selon la revendication 1 ou 2, **caractérisé en ce que** pour un rayon de jante donné (R), le nombre de mesures d'accélération par tour de roue (N) est fixé à 15.

**4.** Procédé de localisation selon la revendication 1 ou 2, **caractérisé en ce que** pour un rayon de jante estimé (R), le nombre de mesures d'accélération par tour de roue (N) est supérieur à 15.

**5.** Procédé de localisation selon l'une quelconque des revendications précédentes **caractérisé en ce que** les mesures d'accélérations sont filtrées, par un filtre passe-haut et/ou par un filtre passe-bas afin d'éliminer les mesures issues de bruits parasites.

**6.** Dispositif d'échantillonnage de mesure d'accélération d'une roue (10, 20, 30, 40), d'un véhicule (1), ledit véhicule (1) étant muni d'un système de surveillance de la pression des pneumatiques, et étant équipé d'une unité centrale électronique (2), les dites roues comportant chacune :

• une unité roue (A, B, C, D) fixé sur une jante (J10, J20, J30, J40) de rayon R et comportant au moins un accéléromètre, mesurant l'accélération radiale $F_1$ de la roue,
• un microprocesseur,

le dit dispositif comportant des moyens de mesure, par tour de roue, à des intervalles de temps donnés ($T_{mesure}$), d'un nombre (N) de valeurs d'accélération radiale par l'accéléromètre radial,
le dit dispositif étant **caractérisé en ce qu'**il comprend en outre :

• des moyens de fixation d'un nombre minimum (N) de mesures d'accélération par tour de roue,
• des moyens de détermination d'intervalles de temps ($T_{mesure}$) entre deux mesures d'accélération par la relation suivante :

$$T_{mesure} = \frac{2\pi \cdot \sqrt{\dfrac{R}{F_1}}}{N}$$

mettant en oeuvre le procédé selon l'une quelconque des revendications précédentes.

**Patentansprüche**

**1.** Verfahren zum Abtasten von an einem Rad (10, 20, 30, 40) eines Automobilfahrzeugs (1) gemessenen Beschleunigungsmessdaten, wobei das Fahrzeug (1) mit einem System zur Überwachung des Drucks der Reifen ausgerüstet und mit einer zentralen elektronischen Einheit (2) ausgestattet ist, wobei jedes Rad (10, 20, 30, 40) umfasst:

• eine Radeinheit (A, B, C, D), befestigt auf einer Felge (J10, J20, J30, J40) vom Radius R und umfassend mindestens eine Beschleunigungsmessvorrichtung, welche die Radialbeschleunigung $F_1$ des Rades misst,
• einen Mikroprozessor,

wobei das Verfahren daraus besteht, mit der Radialbeschleunigungs-Messvorrichtung eine Anzahl (N) von Radialbeschleunigungswerten pro Umdrehung des Rades zu gegebenen Zeitintervallen ($T_{mesure}$) zu messen, und das Verfahren **dadurch gekennzeichnet ist, dass** es besteht aus:

• Festlegen einer Mindestanzahl (N) von Beschleunigungsmessdaten pro Umdrehung des Rades, und
• Bestimmen der Zeitintervalle ($T_{mesure}$) zwischen zwei Messungen der Radialbeschleunigung mittels der folgenden Beziehung:

$$T_{mesure} = \frac{2\pi \cdot \sqrt{\dfrac{R}{F_1}}}{N}$$

2. Verfahren zur Lokalisierung gemäß Anspruch 1, **dadurch gekennzeichnet, dass** die Beschleunigungsmessvorrichtung eine Radialbeschleunigungs-Messvorrichtung ist.

3. Verfahren zur Lokalisierung gemäß Anspruch 1 oder 2, **dadurch gekennzeichnet, dass** für einen gegebenen Felgenradius (R) die Anzahl der Beschleunigungsmessungen pro Umdrehung des Rades (N) mehr als 15 beträgt.

4. Verfahren zur Lokalisierung gemäß Anspruch 1 oder 2, **dadurch gekennzeichnet, dass** für einen geschätzten Felgenradius (R) die Anzahl der Beschleunigungsmessungen pro Umdrehung des Rades (N) mehr als 15 beträgt.

5. Verfahren zur Lokalisierung gemäß irgendeinem der vorhergehenden Ansprüche, **dadurch gekennzeichnet, dass** die Beschleunigungsmessdaten mit einem Hochpassfilter und/oder einem Tiefpassfilter filtriert werden, um die aus Störrauschen hervorgegangenen Messdaten zu eliminieren.

6. Vorrichtung zum Abtasten von an einem Rad (10, 20, 30, 40) eines Automobilfahrzeugs (1) gemessenen Beschleunigungsmessdaten, wobei das Fahrzeug (1) mit einem System zur Überwachung des Drucks der Reifen ausgerüstet und mit einer zentralen elektronischen Einheit ausgestattet ist, wobei jedes Rad (10, 20, 30, 40) umfasst:

   • eine Radeinheit (A, B, C, D), befestigt auf einer Felge (J10, J20, J30, J40) vom Radius R und umfassend mindestens eine Beschleunigungsmessvorrichtung, welche die Radialbeschleunigung $F_1$ des Rades misst,
   • einen Mikroprozessor,

   wobei die Vorrichtung Mittel zur Messung einer Mindestanzahl (N) von Beschleunigungsmessdaten pro Umdrehung des Rades zu gegebenen Zeitintervallen ($T_{mesure}$) mittels der Radialbeschleunigungs-Messvorrichtung umfasst, und die Vorrichtung **dadurch gekennzeichnet ist, dass** sie außerdem umfasst:

   • Mittel zum Festlegen einer Mindestanzahl (N) von Beschleunigungsmessdaten pro Umdrehung des Rades, und
   • Mittel zum Bestimmen der Zeitintervalle ($T_{mesure}$) zwischen zwei Messungen der Radialbeschleunigung mittels der folgenden Beziehung:

$$T_{mesure} = \frac{2\pi \cdot \sqrt{\dfrac{R}{F_1}}}{N}$$

wobei das Verfahren gemäß irgendeinem der vorhergehenden Ansprüche verwendet wird.


**Claims**

1. Method of sampling acceleration measurements of a wheel (10, 20, 30, 40) of a motor vehicle (1), said vehicle (1) having a tire pressure monitoring system and being fitted with an electronic central unit (2), each of said wheels (10, 20, 30, 40) including:

• a wheel unit (A, B, C, D) fixed to a rim (J10, J20, J30, J40) of radius R and having at least one accelerometer, measuring the radial acceleration $F_1$ of the wheel, and
• a microprocessor,

said method consisting in the measurement, for each wheel revolution, at given time intervals ($T_{measurement}$), of a number (N) of radial acceleration values by the radial accelerometer, and the method being **characterized in that** it consists in:

• fixing a minimum number (N) of acceleration measurements per wheel revolution, and
• determining the time intervals ($T_{measurement}$) between two radial acceleration measurements, by means of the following relation:

$$T_{measurement} = \frac{2\pi \cdot \sqrt{\dfrac{R}{F_1}}}{N}$$

2. Location method according to Claim 1, **characterized in that** the accelerometer is a radial accelerometer.

3. Location method according to Claim 1 or 2, **characterized in that**, for a given rim radius (R), the number of acceleration measurements per wheel revolution (N) is fixed at 15.

4. Location method according to Claim 1 or 2, **characterized in that**, for an estimated rim radius (R), the number of acceleration measurements per wheel revolution (N) is greater than 15.

5. Location method according to any of the preceding claims, **characterized in that** the acceleration measurements are filtered, by a high-pass and/or a low-pass filter, in order to eliminate the measurements caused by parasitic noise.

6. Device for sampling acceleration measurements of a wheel (10, 20, 30, 40) of a motor vehicle (1), said vehicle (1) having a tire pressure monitoring system, and being fitted with an electronic central unit (2), each of said wheels including:

• a wheel unit (A, B, C, D) fixed to a rim (J10, J20, J30, J40) of radius R and having at least one accelerometer, measuring the radial acceleration $F_1$ of the wheel, and
• a microprocessor,

said device including means for the measurement, for each wheel revolution, at given time intervals ($T_{measurement}$), of a number (N) of radial acceleration values by the radial accelerometer, said device being **characterized in that** it further comprises:

• means for fixing a minimum number (N) of acceleration measurements per wheel revolution, and
• means for determining time intervals ($T_{measurement}$) between two radial acceleration measurements, by means of the following relation:

$$T_{measurement} = \frac{2\pi \cdot \sqrt{\dfrac{R}{F_1}}}{N}$$

using the method according to any of the preceding claims.

Fig 1

EP 2 655 102 B1

Fig 2a

Fig 2b

Fig 3

**RÉFÉRENCES CITÉES DANS LA DESCRIPTION**

**Documents brevets cités dans la description**

• US 20050156722 A